# EUROPEAN PATENT APPLICATION

(11) **EP 4 593 230 A2**
(43) Date of publication of application: **30.07.2025**
(21) Application number: 25153670.2
(22) Date of filing: 23.01.2025
(51) Int. Cl.: H02J 3/32, H02J 3/38, H02J 7/35

(54) **METHOD AND SYSTEM FOR ADJUSTING OUTPUT POWER OF PHOTOVOLTAIC ENERGY STORAGE DEVICE, PHOTOVOLTAIC ENERGY STORAGE DEVICE, COMPUTER-READABLE STORAGE MEDIUM, AND COMPUTER PROGRAM PRODUCT**

(30) Priority: 29.01.2024 CN 202410125523
(71) Applicant: Anker Innovations Technology Co., Ltd., Changsha, Hunan 410000 (CN)
(72) Inventor: CHEN, Wei, Shenzhen (CN); LI, Yiyong, Shenzhen (CN)
(74) Representative: Steffens, Adrian

(57) **Abstract**

The present disclosure relates to a method, system, and apparatus for adjusting output power of a photovoltaic energy storage device, a photovoltaic energy storage device, a storage medium, and a computer program product. The method includes: receiving a discharge command carrying target output power; controlling an output voltage of the photovoltaic energy storage device to a preset initial output voltage; and adjusting the output voltage based on a current variation of an output current when the output voltage is less than a preset voltage or the output current is greater than a preset current, until a power difference between actual output power and the target output power falls within a preset power difference error range. The above method can adjust power accurately, flexibly provide stable and reliable power output, reduce excessive or insufficient power output, and improve stability and safety of the system. (Fig. 1)

## Description

The present disclosure relates to the technical field of energy storage, in particular to a method, system, and apparatus for adjusting output power of a photovoltaic energy storage device, a photovoltaic energy storage device, a storage medium, and a computer program product.

### Background

A photovoltaic energy storage device is a device that integrates photovoltaic power generation and energy storage and is intended to utilize solar energy to provide electricity and store excess electric energy for future use.

Currently, the photovoltaic energy storage device has a wide range of application scenarios, such as a residential photovoltaic power generation system, an energy management system for commercial buildings, a micro grid, and an electric vehicle charging station. The residential photovoltaic power generation system typically consists of a photovoltaic array, a photovoltaic energy storage device, and an inverter. The system converts solar energy into electric energy and stores excess electric energy for use during night or peak periods of electricity demand, achieving self-sufficiency and saving of household energy.

However, there are still some issues on a method for adjusting output power of a photovoltaic energy storage device: methods for adjusting output power in the related art are hard to meet the need for accurate adjustment of output power.

### Summary

Accordingly, it is necessary to provide a method, apparatus, computer device, computer-readable storage medium, and computer program product for adjusting output power of a photovoltaic energy storage device more accurately to address the above technical issues.

In a first aspect, the present disclosure provides a method for adjusting output power of a photovoltaic energy storage device, which is applied to a controller in the photovoltaic energy storage device and includes: receiving a discharge command carrying target output power; controlling an output voltage of the photovoltaic energy storage device to a preset initial output voltage; and adjusting the output voltage based on a current variation of an output current (in particular, at a present time / at a present moment / currently / presently) when the output voltage is less than a preset voltage or the output current is greater than a preset current, until a power difference between actual output power and the target output power falls within a preset power difference error range.

Said adjusting the output voltage based on the current variation of the output current (at the present moment / currently) may include:
adjusting the output voltage based on a first current variation or a second current variation of the output current (at the present moment / currently), preferably in which the first current variation corresponds to a variation of the output current relative to the preset current, and/or the second current variation corresponds to a variation of the output current relative to a maximum power current when the output current is greater than the maximum power current, the maximum power current being greater than the preset current.

Said adjusting the output voltage based on the first current variation or the second current variation of the output current (at the present time / currently) may include at least one of:
- determining the maximum power current based on the target output power and the preset initial output voltage;
- obtaining a first ratio of the first current variation to the maximum power current, or obtaining a second ratio of the second current variation to the maximum power current;
- determining a first voltage adjustment amount based on the first ratio and a preset proportionality coefficient, or determining a second voltage adjustment amount based on the second ratio and the preset proportionality coefficient; and
- adjusting the output voltage based on the first current variation and the first voltage adjustment amount, or adjusting the output voltage based on the second current variation and the second voltage adjustment amount.

Said adjusting the output voltage based on the first current variation and the first voltage adjustment amount may include at least one of:
- reducing the output voltage based on the first voltage adjustment amount when the first current variation is a positive variation;
- increasing the output voltage based on the first voltage adjustment amount when the first current variation is a negative variation;

Said adjusting the output voltage based on the second current variation and the second voltage adjustment amount may include at least one of:
- reducing the output voltage based on the second voltage adjustment amount when the second current variation is a positive variation; and
- increasing the output voltage based on the second voltage adjustment amount when the second current variation is a negative variation.

In a further aspect, the present disclosure also provides a method for adjusting output power of a photovoltaic energy storage device, which is applied to a controller in the photovoltaic energy storage device and includes:
- receiving a discharge command carrying target output power;
- controlling an output voltage of the photovoltaic energy storage device to a preset initial output voltage; and
- adjusting an output current based on a voltage variation of the output voltage relative to the preset initial output voltage (at the present time / currently) when the output voltage is less than a preset voltage or the output current is greater than a preset current, until a power difference between actual output power and the target output power falls within a preset power difference error range.

The method may further include at least one of:
determining a maximum power current based on the target output power and the preset initial output voltage; and
- adjusting the output current based on the voltage variation of the output voltage relative to the preset initial output voltage (at the present time / currently) when the output current is greater than the maximum power current, until the power difference between the actual output power and the target output power falls within the preset power difference error range.

Said adjusting the output current based on the voltage variation of the output voltage relative to the preset initial output voltage (at the present time / currently) may include at least one of:
- obtaining a third ratio of the voltage variation to the preset initial output voltage;
determining a current adjustment amount based on the third ratio and a preset proportionality coefficient; and
- adjusting the output current based on the voltage variation and the current adjustment amount.

Said adjusting the output current based on the voltage variation and the current adjustment amount may include at least one of:
- reducing the output current based on the current adjustment amount when the voltage variation is a positive variation; and
- increasing the output current based on the current adjustment amount when the voltage variation is a negative variation.

In a further aspect, the present disclosure provides a system for adjusting output power of a photovoltaic energy storage device, including: a photovoltaic assembly, a photovoltaic energy storage device, and a microinverter, in which the photovoltaic assembly is connected to the microinverter and the photovoltaic energy storage device; and the photovoltaic energy storage device is configured to adjust the output power according to the steps in any embodiment of the above-mentioned methods for adjusting the output power of the photovoltaic energy storage device and to discharge to the microinverter upon receiving a discharge command carrying target output power sent by a client in communication connection therewith.

In an example, the present disclosure may provide an apparatus for adjusting output power of a photovoltaic energy storage device, which is applied to a controller in the photovoltaic energy storage device and includes:
a data receiving module configured to receive a discharge command carrying target output power;
a voltage control module configured to control an output voltage of the photovoltaic energy storage device to a preset initial output voltage;
a data monitoring module configured to monitor the output voltage, an output current, and actual output power of the photovoltaic energy storage device; and
a data adjustment module configured to adjust the output voltage based on a current variation of the output current (at the present time / currently) when the output voltage is less than a preset voltage or the output current is greater than a preset current, until a power difference between the actual output power and the target output power falls within a preset power difference error range; or
configured to adjust the output current based on a voltage variation of the output voltage relative to the preset initial output voltage (at the present time / currently) when the output voltage is less than the preset voltage or the output current is greater than the preset current, until a power difference between the actual output power and the target output power falls within a preset power difference error range.

In a further aspect, the present disclosure provides a photovoltaic energy storage device, including a memory, a controller, and a DC conversion module, the controller being connected to the memory and the DC conversion module, the memory storing a computer program, in which the controller is configured to monitor an output voltage, output current, and actual output power of the DC conversion module, to execute the computer program upon receiving a discharge command carrying target output power, and to adjust the actual output power of the DC conversion module according to the steps in any embodiment of the above-mentioned methods for adjusting the output power of the photovoltaic energy storage device.

In a further aspect, the present disclosure provides a computer-readable storage medium on which a computer program is stored. When the computer program is executed by a processor, the steps in any embodiment of the above-mentioned methods for adjusting the output power of the photovoltaic energy storage device are performed.

In a further aspect, the present disclosure provides a computer program product including a computer program. When the computer program is executed by a processor, the steps in any embodiment of the above-mentioned methods for adjusting the output power of the photovoltaic energy storage device are performed.

The above-described methods, system, and apparatus for adjusting the output power of the photovoltaic energy storage device, photovoltaic energy storage device, and storage medium include: controlling an output voltage of the photovoltaic energy storage device to a preset initial output voltage upon receiving a discharge command carrying target output power, and adjusting the output voltage based on a current variation of an output current when the output voltage is less than a preset voltage or the output current is greater than a preset current, or adjusting an output current based on a voltage variation of the output voltage relative to the preset initial output voltage, until a power difference between actual output power and the target output power falls within a preset power difference error range, thereby adjusting the power accurately, flexibly providing stable and reliable power output, reducing excessive or insufficient power output, and improving stability and safety of the system.

### Brief description of drawings

- Fig. 1: is an application environment diagram of a method for adjusting output power of a photovoltaic energy storage device in an embodiment;
- Fig. 2: is a flowchart of a method for adjusting output power of a photovoltaic energy storage device in an embodiment;
- Fig. 3: is a flowchart of a method for adjusting output power of a photovoltaic energy storage device in another embodiment;
- Fig. 4: is a flowchart of an operation for adjusting an output voltage based on a first current variation in an embodiment;
- Fig. 5: is a flowchart of an operation for adjusting an output voltage based on a second current variation in an embodiment;
- Fig. 6: is a flowchart of a method for adjusting output power of a photovoltaic energy storage device in yet another embodiment;
- Fig. 7: is a flowchart of a method for adjusting output power of a photovoltaic energy storage device in still another embodiment;
- Fig. 8: is a detailed flowchart of a method for adjusting output power of a photovoltaic energy storage device in an embodiment;
- Fig. 9: is a block diagram of a system for adjusting output power of a photovoltaic energy storage device in an embodiment;
- Fig. 10: is a block diagram of an apparatus for adjusting output power of a photovoltaic energy storage device in an embodiment;
- Fig. 11: is a block diagram of an apparatus for adjusting output power of a photovoltaic energy storage device in another embodiment; and
- Fig. 12: is a block diagram of a photovoltaic energy storage device in an embodiment.

### Detailed description

In order to make the purpose, technical solution, and advantages of the present disclosure clearer and more understandable, the following will provide further detailed description of the present disclosure in conjunction with the accompanying drawings and embodiments. It should be understood that the specific embodiments described herein are merely for explaining the present disclosure and are not intended to limit the scope of the present disclosure.

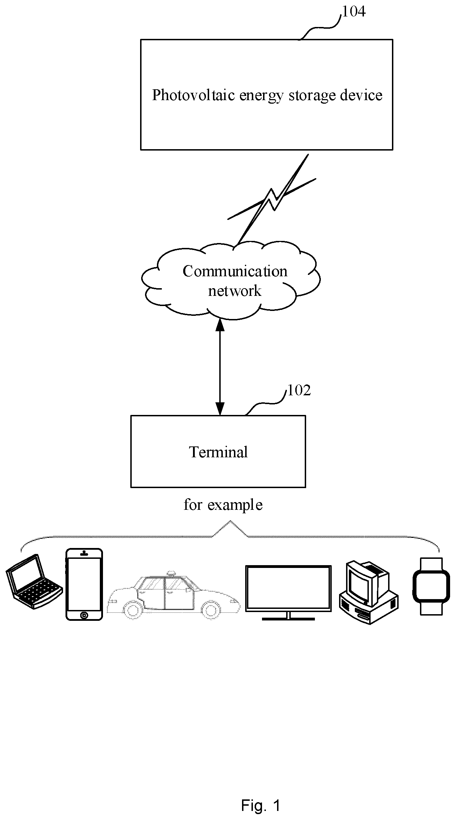

A method for adjusting output power of a photovoltaic energy storage device in the present disclosure can be applied to the application environment shown in Fig. 1, in which a terminal 102 communicates with a photovoltaic energy storage device 104 through a network. Specifically, a user may send a discharge command carrying target output power to a controller of the photovoltaic energy storage device 104 through the terminal 102. The controller responds to the discharge command, controls an output voltage of the photovoltaic energy storage device to a preset initial output voltage, and then monitors the output voltage, output current, and actual output power of the photovoltaic energy storage device in real time. When the output voltage is less than a preset voltage or the output current is greater than a preset current, the output voltage is adjusted based on a current variation of the output current currently, until a power difference between actual output power and the target output power falls within a preset power difference error range, to meet the user's electricity demand.

The terminal 102 may include but is not limited to various personal computers, laptops, smartphones, tablets, loT devices, and portable wearable devices. IoT devices can include smart speakers, smart TVs, smart air conditioners, smart car devices, etc. Portable wearable devices can include smartwatches, smart bracelets, head mounted devices, etc. The photovoltaic energy storage device 104 may be, but is not limited to, energy storage devices such as microinverter energy storage devices and residential energy storage devices that use electricity generated by photovoltaic power generation with photovoltaic arrays as input.

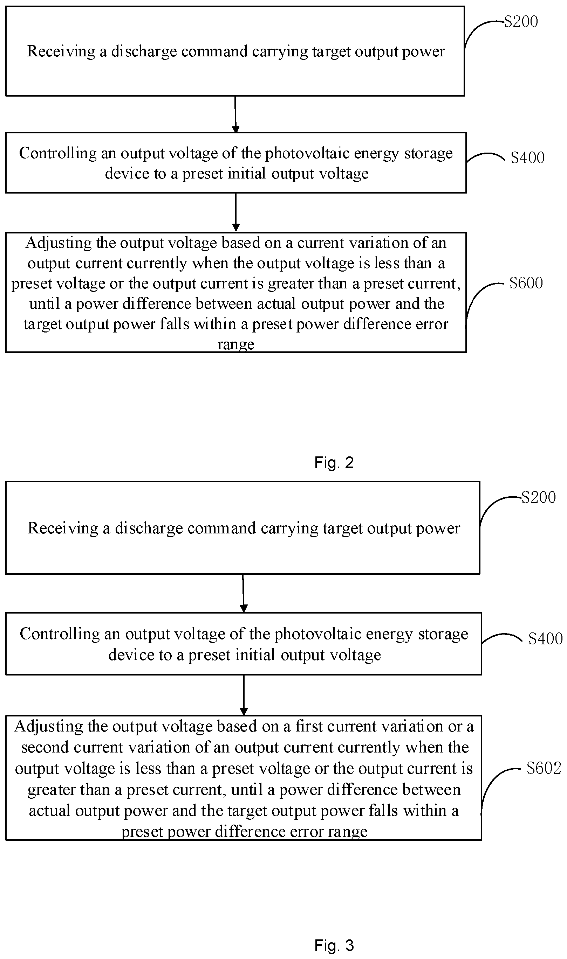

In an embodiment, as shown in Fig. 2, a method for adjusting output power of a photovoltaic energy storage device is provided, is applied to the controller of the photovoltaic energy storage device 104 in Fig. 1 for example, and includes the following steps S200 to S600.

S200: receiving a discharge command carrying target output power.

In the embodiment, photovoltaic energy storage devices can include, but are not limited to, microinverter energy storage devices, residential energy storage devices (also known as household energy storage devices), and other energy storage devices that use electricity generated by photovoltaic arrays as input. The controller in the photovoltaic energy storage device may be a microcontroller unit (MCU). The target output power refers to discharge power given by a user, or given output power.

In the embodiment, taking a microinverter energy storage device as an example of the photovoltaic energy storage device, the microinverter energy storage device includes interconnected direct current (DC) conversion modules such as a buck-boost DC/DC module and an MCU, with the DC conversion module connected to an external inverter. The buck-boost DC/DC module is used to raise or lower the voltage of the DC power supply in the energy storage device to a level suitable for specific applications. The MCU of the energy storage device is usually used to control and manage various aspects of the energy storage system, including battery management, charge and discharge control, communication interfaces, data acquisition and processing, and other functions, which can monitor and control the status of the energy storage system, execute various algorithms and logic to achieve safe and efficient operation of the energy storage system.

In practical applications, when there is a demand for electricity, a discharge command carrying target output power, such as 200W (watts), can be sent to the MCU through a user terminal. The MCU receives the discharge command, which usually includes target output power and other necessary parameters.

S400: controlling the output voltage of the photovoltaic energy storage device to the preset initial output voltage.

In this embodiment, the output voltage of the DC conversion module can be regarded as the output voltage of the photovoltaic energy storage device. The preset initial output voltage can serve as a default voltage of the DC conversion module, a default value. For example, the initial output voltage may be 40V (volts).

As the control center of the energy storage device, upon receiving the discharge command sent by the user terminal, the MCU parses the received discharge command, extracts a value of the target output power, and performs subsequent processing. For example, the MCU can communicate with the DC conversion module through a communication interface and send control signals to the DC conversion module to control an output voltage thereof to a preset initial output voltage (such as 40V), which can be achieved by adjusting internal control parameters within the DC conversion module or by sending specific control commands. After controlling the output voltage of the DC conversion module to the initial output voltage (such as 40V), the MCU can periodically or in real time monitor the output current and the output voltage of the DC conversion module, calculate the actual output power based on the output current and output voltage, and compare the actual output power with the target output power to ensure that the actual output power reaches the preset target power (2000W). In the embodiment, a monitoring period may be 2 microseconds. It can be understood that, in other embodiments, the monitoring period may be 5 microseconds, 10 microseconds, or even 10 milliseconds, which is determined according to the device model and actual situations.

S600: adjusting the output voltage based on the current variation of the output current currently when the output voltage is less than the preset voltage or the output current is greater than the preset current, until the power difference between the actual output power and the target output power falls within the preset power difference error range.

In the embodiment, the preset voltage can be determined based on the initial output voltage and experimental data. The preset voltage is usually 0.7 or 0.8 times the initial output voltage. When the voltage is less than the preset voltage, a significant deviation between the output power of the energy storage device and maximum output power occurs, indicating a need to adjust the output power. The preset current can be determined based on the performance parameters and model of the microinverter, as well as extensive experimental data. When the current is greater than the preset current, a load-end microinverter starts operation since starting the microinverter leads to some voltage loss or drop. Additionally, as the microinverter operates, current flows to the load, the energy storage device may experience some voltage fluctuations, and the output power varies therewith. Thus, output power adjustment is necessary. Therefore, in the embodiment, two conditions for power adjustment are set: when the output voltage is less than the preset voltage, or when the output current is greater than the preset current, the output power needs to be adjusted. For example, the preset voltage may be 28V, and the preset current may be 1A (ampere). The power difference error range may be, but is not limited to, 0W to 0.5W, 0W to 1W, or other ranges. In the embodiment, the power difference error range may be 0W to 0.5W, meaning that if the power difference between the actual output power and the target output power falls within the power difference error range, it indicates that the actual output power approaches the target output power, meeting the requirements set by the user.

Due to characteristics of photovoltaic power generation, an I-U (current-voltage) characteristic curve of solar cells typically exhibits the following features: the cell generates a certain level of internal resistance due to internal chemical reactions and structural factors, which limits the cell's maximum output current. This internal resistance causes the cell's output voltage to decrease as the load current increases, which is reflected in a reduced slope of the I-U curve. When the load current reaches a certain threshold, the output voltage of the cell no longer decreases with further increases in current and tends to stabilize. This stabilized voltage is called the saturation voltage, indicating stable voltage output of the cell under that load.

In practical applications, when the output voltage of the DC conversion module is controlled to 40V, the output voltage of the DC conversion module will decrease and fluctuate as the load current continues increasing. Therefore, the MCU can monitor the output voltage, output current, and actual output power of the DC conversion module. If the power difference between the actual output power and the target output power of the DC conversion module falls outside the preset power difference error range, it indicates that the output power of the photovoltaic energy storage device does not meet the user's requirements. The MCU can make adjustments based on the feedback information of the output current and the output voltage.

In the embodiment, taking a monitoring period of 2 microseconds as an example, when the output voltage of the DC conversion module is detected to be less than the preset voltage of 28V, or when the output current of the DC conversion module is detected to be greater than the preset current of 1A, the current variation of the output current of the DC conversion module currently is obtained. Then, based on the current variation, the output current adjustment for this cycle is completed. At this time, it is calculated whether the current actual power is equal to the target output power. If not, the adjustment continues. At the start of the next monitoring period, the output voltage and output current of the DC conversion module at current time are obtained again. If the output voltage of the DC conversion module is still detected to be less than the preset voltage of 28V, or if the output current of the DC conversion module is detected to be greater than the preset current of 1A, the current variation of the output current currently is obtained, and the output voltage is adjusted based on the current variation. Through multiple monitoring and adjustment processes, the actual output power of the DC conversion module is gradually brought closer to the target output power, that is, the power difference between the actual output power and the target output power falls within the preset power difference error range, the adjustment stops, at which time the actual output power meets the user's electricity demand.

In the above method for adjusting the output power of the photovoltaic energy storage device, after receiving a discharge command carrying target output power and controlling an output voltage of the photovoltaic energy storage device to a preset initial output voltage, the output voltage is adjusted based on a monitored current variation of an output current when the output voltage is less than a preset voltage or the output current is greater than a preset current, until a power difference between actual output power and the target output power falls within a preset power difference error range, thereby adjusting the power accurately, flexibly providing stable and reliable power output, reducing excessive or insufficient power output, and improving stability and safety of the system.

As shown in Fig. 3, in an embodiment, S600 includes S602: adjusting the output voltage based on the first current variation or the second current variation of the output current currently when the output voltage is less than the preset voltage or the output current is greater than the preset current, until the power difference between the actual output power and the target output power falls within the preset power difference error range.

The first current variation corresponds to the variation of the output current relative to the preset current, and the second current variation corresponds to the variation of the output current relative to the maximum power current when the output current is greater than the maximum power current. The maximum power current is greater than the preset current.

The maximum power current refers to the current magnitude that can achieve the maximum output power in a given circuit or device. In the embodiment, the maximum output power of the photovoltaic energy storage device is the target output power, therefore, the ratio of the target output power to the initial output voltage is the maximum power current.

In specific implementation, the output voltage is adjusted based on the current variation, including multiple adjustment methods. Specifically, the output voltage can be adjusted based on the first current variation of the current output relative to the preset current. The output voltage also can be adjusted based on the second current variation of the output current relative to the maximum power current when the output current is greater than the maximum power current.

In practical applications, when there is a sudden change or significant fluctuation in lighting conditions, or when there is an abrupt increase in load or short circuits occur, or when photovoltaic energy storage device malfunctions or is damaged, the output current of the photovoltaic energy storage device may momentarily exceed the maximum power current, which can affect the stability and efficiency of the photovoltaic energy storage device and even cause damage to the device.

Therefore, after receiving the discharge command and extracting the target output power from the discharge command, the maximum power current can be determined based on the target output power and the preset initial output voltage. For example, if the target output power is 200W and the preset initial output voltage is 40V, then the maximum power current is 200W/40V=5A. Subsequently, the output current of the DC conversion module is monitored to check whether it is greater than the maximum power current of 5A, with a monitoring period that can be 10 seconds. If during the monitoring period (such as between the 1st and 10th second), the output current of the DC conversion module is detected to be 3A (greater than the preset current of 1A but less than the maximum power current of 5A), the first current variation of the output current relative to the preset current is obtained. Based on the first current variation, the output current adjustment for this cycle is completed. At this point, it is determined whether the power difference between the current actual output power and the target output power falls within the preset power difference error range. If it is not, monitoring continues. At the start of the next monitoring period, the output current, output voltage, and actual output power of the DC conversion module at current time are obtained again. If the output current of the DC conversion module is still greater than 1A, the first current variation of the output current relative to the preset current is recalculated. Then, based on the second current variation, the output current adjustment for this cycle is completed.

If during the present monitoring period (such as between the 21st second and the 30th second), the present output current of the DC conversion module is detected to be 6A, which is greater than the maximum power current of 5A, the second current variation (1A) of the output current relative to the maximum power current is obtained. Then, based on the second current variation, the output current adjustment for this cycle is completed. At this point, it is determined whether the power difference between the current actual output power and the target output power falls within the preset power difference error range. If it is not, monitoring continues. At the start of the next monitoring period, the output current, output voltage, and actual output power of the DC conversion module at current time are obtained again. If the output current of the DC conversion module is still greater than 5A, the difference between the present output current and the maximum power current is recalculated to obtain the second current variation of the output current relative to the maximum power current. Then, based on the second current variation, the output current adjustment for this cycle is completed. The above steps are repeated multiple times to continuously monitor the output current and output voltage, and adjust the output voltage based on the second current variation of the present output current relative to the maximum power current. Through multiple monitoring and adjustment processes, the actual output power of the DC conversion module is gradually brought closer to the target output power. Stop the adjustments once the actual output power meets the user's power demand.

In the embodiment, by providing multiple methods for adjusting the output voltage according to the current variation, different adjustment methods can be chosen based on varying conditions, offering greater flexibility and enabling accurate adjustment of output power. Moreover, by adjusting the output voltage based on the second current variation when the output current is detected to be greater than the maximum power current, the power difference between the actual output power and the target output power falls within the preset power difference error range, which can enable the photovoltaic energy storage device to operate within the optimal working range and improve the stability and reliability of the device.

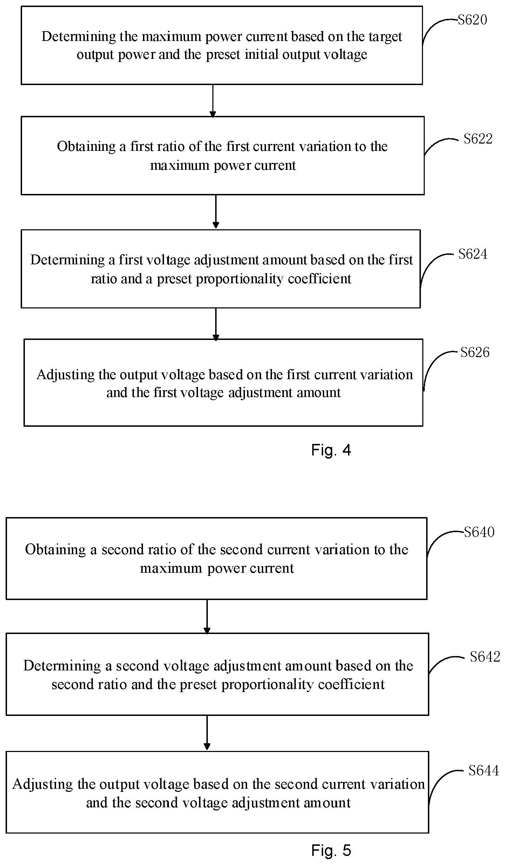

As shown in Fig. 4, in an embodiment, adjusting the output voltage based on the first current variation of the output current currently includes:
S620: determining the maximum power current based on the target output power and the preset initial output voltage.
S622: obtaining a first ratio of the first current variation to the maximum power current.
S624: determining a first voltage adjustment amount based on the first ratio and a preset proportionality coefficient.
S626: adjusting the output voltage based on the first current variation and the first voltage adjustment amount.

In the embodiment, the method for adjusting the output voltage based on the first current variation is explained. Specifically, the adjustment mechanism can be set such that for every 10% increase or decrease in current, the corresponding voltage decreases or increases by 1V. Therefore, the preset proportionality coefficient can be 0.1. It is understood that in other embodiments, the proportionality coefficient may also be, but is not limited to, other values such as 0.15 or 0.2.

In the embodiment, after the MCU extracts the target output power from the discharge command, the maximum power current can be determined based on the target output power and the preset initial output voltage. Specifically, when the target output power is 200W and the preset initial output voltage is 40V, the maximum power current is calculated as 200W/40V=5A.

When the MCU detects that the output voltage is lower than the preset voltage, it can continue to reduce the output voltage through reverse feedback to intensify the voltage drop. This prompts the MCU to detect that the voltage is too low and make corresponding adjustments. The output power of the DC conversion module is then adjusted to bring it closer to the expected target output power. Alternatively, when the output current is detected to be greater than the preset current, it indicates that the output power is too high. In this case, positive feedback can be used to reduce the output voltage, thereby decreasing the output power so that the actual output power approaches the target output power.

Specifically, the method for adjusting the output voltage can be as follows: obtaining the first current variation of the output current relative to the preset current currently, comparing the first current variation with the maximum power current to obtain the first ratio of the first current variation to the maximum power current, then dividing the first ratio by the preset proportionality coefficient to obtain the first voltage adjustment amount, and then adjusting the output voltage based on the first current variation and the first voltage adjustment amount.

In another embodiment, adjusting the output voltage based on the first current variation and the first voltage adjustment amount can involve reducing the output voltage based on the first voltage adjustment amount when the first current variation is a positive variation, and increasing the output voltage based on the first voltage adjustment amount when the first current variation is a negative variation.

When the current variation is a positive variation, the current increases compared to the reference value, and when the current variation is a negative variation, the current decreases compared to the reference value.

In specific implementation, it can be determined whether the first current variation is a positive or negative variation based on whether the output current increases or decreases compared to the preset current of 1A, and the output voltage is then adjusted according to the determination. For example, if the output current increases by 10% compared to the preset current, the output voltage decreases by 1V; if the output current decreases by 10% compared to the preset current, the output voltage increases by 1V.

For example, if the present output current is 2A and the present output voltage is 40V, the first current variation of the present output current related to the preset current of 1A is a positive variation, that is, +1A. At this point, it is necessary to reduce the output voltage, with the output voltage calculated as: 40V- (2A-1A)/5A/0.1=38V.

In the embodiment, adjusting the output voltage based on a positive variation and negative variation of the current variation can enhance load adaptability of the photovoltaic energy storage device, allowing the photovoltaic energy storage device to approach an optimal operating state and provide stable power output.

As shown in Fig. 5, in an embodiment, adjusting the output voltage based on the second current variation currently includes:
S640: obtaining a second ratio of the second current variation to the maximum power current.
S642: determining a second voltage adjustment amount based on the second ratio and the preset proportionality coefficient.
S644: adjusting the output voltage based on the second current variation and the second voltage adjustment amount.

In the embodiment, the preset proportionality coefficient is also 0.1. the way to adjust the output voltage based on the second current variation when the output current is greater than the maximum power current can be comparing the second current variation with the maximum power current, obtaining the second ratio of the second current variation to the maximum power current, and then dividing the second ratio by the preset proportionality coefficient to obtain the second voltage adjustment amount. Next, adjust the output voltage based on the second current variation and the second voltage adjustment amount. Specifically, the output voltage can be adjusted based on whether the second current variation is a positive variation.

In another embodiment, if the second current variation is a positive variation, the output voltage can be reduced based on the second voltage adjustment amount; if the second current variation is a negative variation, the output voltage can be increased based on the second voltage adjustment amount.

For example, if during the present monitoring period (such as between the 11th second and the 20th second), it is detected that the output current of the DC conversion module currently is 6A (greater than the maximum power current of 5A), and the output voltage currently is 32V, since the second current variation is a positive variation, the output voltage should be reduced to 32V- (6A-5A)/5A/0.1=30V.

In the embodiment, adjusting the output voltage based on a positive or negative variation of the second current variation, when the output current is greater than the maximum power current, can enhance the load adaptability of the photovoltaic energy storage device, allowing it to approach its optimal operating state and provide stable power output.

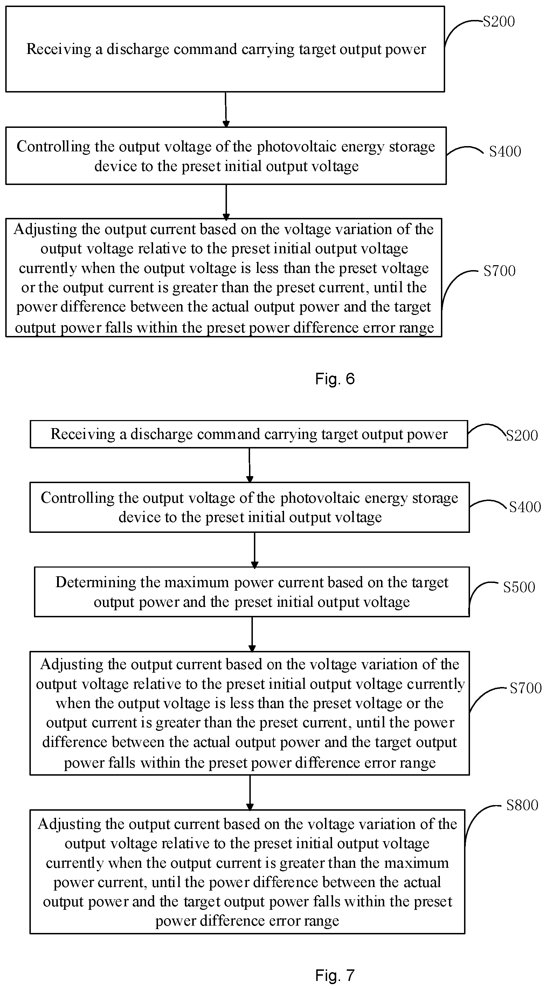

As shown in Fig. 6, based on the same inventive concept, the present disclosure also provides a method for adjusting the output power of the photovoltaic energy storage device, which is applied to the controller in the photovoltaic energy storage device. This method can also be applied to the application environment diagram shown in Fig. 1. The method includes:
S200: receiving a discharge command carrying target output power.
S400: controlling the output voltage of the photovoltaic energy storage device to the preset initial output voltage.
S700: adjusting the output current based on the voltage variation of the output voltage relative to the preset initial output voltage currently when the output voltage is less than a preset voltage or the output current is greater than a preset current, until the power difference between actual output power and the target output power falls within the preset power difference error range.

The output power adjustment mentioned in the embodiments of the above methods for adjusting the output power of the photovoltaic energy storage device involves adjusting the output voltage based on the current variation to control the output power of the photovoltaic energy storage device. In this embodiment, the method for adjusting the power involves adjusting the output current based on the voltage variation, thereby controlling the output power.

Specifically, when the output voltage of the DC conversion module is detected to be less than the preset voltage of 28V, or when the output current of the DC conversion module is detected to be greater than the preset current of 1A, the present output voltage is compared with the preset initial voltage, such as 40V, to obtain the voltage variation of the output voltage of the DC conversion module relative to the preset initial output voltage. For example, if the present output voltage is 26V, the voltage variation of the output voltage relative to the preset initial output voltage is 2V. Then, based on the voltage variation, the output current adjustment for this cycle is completed. At this point, it is determined whether the current actual power is equal to the target output power. If it is not, the adjustment continues. At the start of the next monitoring period, the output voltage, output current, and actual output power of the DC conversion module currently are obtained again. If the output voltage of the DC conversion module is detected to be less than the preset voltage of 28V, or if the output current of the DC conversion module is detected to be greater than the preset current of 1A, the voltage variation of the output voltage relative to the preset initial output voltage currently is obtained again. The output current is adjusted based on the voltage variation. If the actual output power still does not meet the target output power, continue to monitor the output current, output voltage, and actual output power, and the output current is adjusted based on the current variation of the output voltage relative to the preset voltage. Through multiple monitoring and adjustment processes, the actual output power of the DC conversion module is gradually brought closer to the target output power, that is, the power difference between the actual output power and the target output power falls within the preset power difference error range, the adjustment stops, and at this point, the actual output power meets the user's electricity demand.

In the embodiment, the output current is adjusted based on the voltage variation, so that the actual power is equal to the target output power, achieving accurate adjustment of power as well.

As shown in Fig. 7, in an embodiment, the method further includes:
S500: determining the maximum power current based on the target output power and the preset initial output voltage.
S800: adjusting the output current based on the voltage variation of the output voltage relative to the preset initial output voltage currently when the output current is greater than the maximum power current, until the power difference between the actual output power and the target output power falls within the preset power difference error range.

In the embodiment, similarly, after receiving the discharge command and extracting the target output power of 200W from the discharge command, the maximum power current can be determined as 200W/40V=5A, based on the target output power of 200W and the preset initial output voltage of 40V.

Subsequently, if the present output current of the DC conversion module is detected to be 6A, which is greater than the maximum power current of 5A, the difference between the present output voltage and the preset initial output voltage is calculated to obtain the voltage variation. Then, based on the voltage variation, the output current adjustment for this cycle is completed. At this point, it is determined whether the current actual power is equal to the target output power. If it is not, monitoring continues. At the start of the next monitoring period, the present output current, output voltage, and actual output power of the DC conversion module are obtained again. If the output current of the DC conversion module is still greater than 5A, the difference between the present output voltage and the preset initial output voltage is recalculated to obtain the voltage variation for this cycle. Then, based on the voltage variation for this cycle, the output current adjustment for this cycle is completed. The above steps are repeated multiple times to continuously monitor the output current, output voltage, and actual output power, and adjust the output current based on the voltage variation of the present output voltage relative to the preset initial output voltage. Through multiple monitoring and adjustment processes, the actual output power of the DC conversion module is gradually brought closer to the target output power, at which point the adjustments stop.

In the embodiment, by adjusting the output current based on the voltage variation when the output current is detected to be greater than the maximum power current, the power difference between the actual output power and the target output power falls within the preset power difference error range, which can enable the photovoltaic energy storage device to operate within the optimal working range and improve the stability and reliability of the device.

In an embodiment, adjusting the output current based on the voltage variation of the present output voltage relative to the preset initial output voltage currently includes obtaining a third ratio of the voltage variation to the preset initial output voltage, determining the current adjustment amount based on the third ratio and the preset proportionality coefficient, and adjusting the output current based on the voltage variation and the current adjustment amount.

Continuing from the previous embodiment, in the embodiment, the method for adjusting the output current voltage based on the voltage variation can be as follows: obtaining the third ratio of the voltage variation to the preset initial output voltage of 40V, and then dividing the third ratio by the preset proportionality coefficient to obtain the current adjustment amount, and finally, adjusting the output current based on the current adjustment amount and voltage variation until the power difference between the actual output power and the target output power falls within the preset power difference error range. Specifically, the output current can be increased or decreased based on the magnitude of the voltage variation.

In another embodiment, the output current can be adjusted based on whether the voltage variation is a positive variation. Specifically, if the voltage variation is a positive variation, the output current is reduced based on the current adjustment amount. If the voltage variation is a negative variation, the output current is increased based on the current adjustment amount. It can be understood that the method for adjusting the output current based on the voltage variation can follow the above methods when the output voltage is less than the preset voltage, the output current is greater than the preset current, or the output current is greater than the maximum power current.

For example, if during the present monitoring period (such as between the 21st second and the 30th second), it is detected that the output current of the DC conversion module currently is 2A, the output voltage currently is 42V, and the voltage variation is a positive variation, then the output current is 2A- (42V-40V)/40V/0.1=1.5A.

In the embodiment, adjusting the output current based on a positive or negative variation in the voltage variation can make the photovoltaic energy storage device approach the optimal working state and provide stable power output.

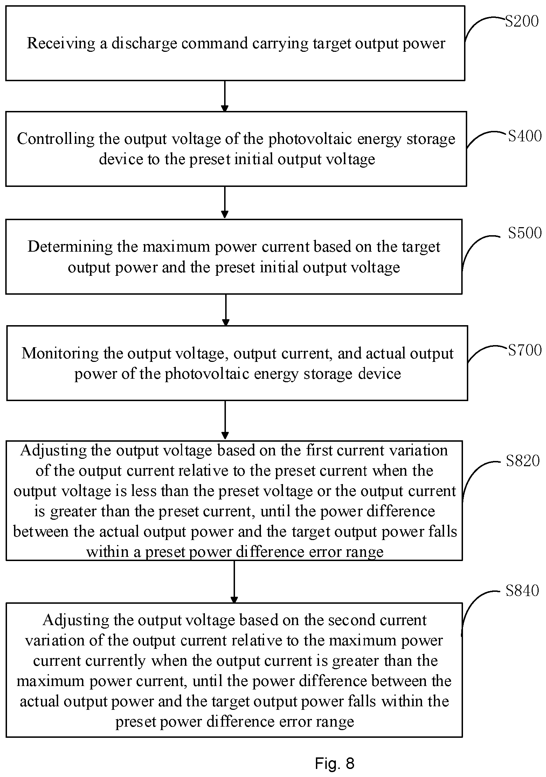

In order to provide a clearer explanation of the method for adjusting the output power of the photovoltaic energy storage device provided in the present disclosure, a specific embodiment and Fig. 8 will be described below. The power adjustment method of this specific embodiment is to periodically adjust the output voltage based on the current variation, and then adjust the output power. This specific embodiment includes the following steps:
S200: receiving a discharge command carrying target output power.
S400: controlling the output voltage of the photovoltaic energy storage device to the preset initial output voltage.
S500: determining the maximum power current based on the target output power and the preset initial output voltage.
Specifically, if the target output power is 200W and the preset initial output voltage is 40V, then the maximum power current is 200W/40V=5A.
S700: monitoring the output voltage, output current, and actual output power of the photovoltaic energy storage device.
S820: adjusting the output voltage based on the first current variation of the output current relative to the preset current when the output voltage is less than the preset voltage or the output current is greater than the preset current, until the power difference between the actual output power and the target output power falls within a preset power difference error range. Specifically, the method for adjusting the output voltage can be as follows: obtaining the first current variation of the output current relative to the preset current currently, comparing the first current variation with the maximum power current to obtain the first ratio of the first current variation to the maximum power current, then dividing the first ratio by the preset proportionality coefficient to obtain the first voltage adjustment amount, and finally adjusting the output voltage based on whether the output current currently increases or decreases compared to the preset current of 1A.

For example, if the present output current is 2A and the present output voltage is 40V, the first current variation of the present output current relative to the preset current of 1A is a positive variation, that is, +1A. At this point, it is necessary to reduce the output voltage, and the output voltage is 40V- (2A-1A)/5A/0.1=38V.

S840: adjusting the output voltage based on the second current variation of the output current relative to the maximum power current currently when the output current is greater than the maximum power current, until the power difference between the actual output power and the target output power falls within the preset power difference error range.

In practical applications, when there is a sudden change or significant fluctuation in lighting conditions, or when there is an abrupt increase in load or short circuits occur, or when photovoltaic energy storage device malfunctions or is damaged, the output current of the photovoltaic energy storage device may momentarily exceed the maximum power current, which can affect the stability and efficiency of the photovoltaic energy storage device and even cause damage to the device.

Therefore, it is possible to monitor whether the output current of the DC conversion module is greater than the maximum power current of 5A. If the present output current of the DC conversion module is detected to be 6A, which is greater than the maximum power current of 5A, the difference between the present output current and the maximum power current is calculated to obtain the second current variation (1A) of the output current relative to the maximum power current. Then, based on the second current variation, the adjustment of the output voltage in this cycle is completed. At this point, it is determined whether the current actual power is equal to the target output power. If it is not, monitoring continues. At the start of the next monitoring period, the present output current, output voltage, and actual output power of the DC conversion module are obtained again. If the output current of the DC conversion module is still greater than 5A, the difference between the present output current and the maximum power current is calculated to obtain the second current variation of the output current relative to the maximum power current. Then, based on the second current variation, the adjustment of the output voltage in this cycle is completed. The above steps are repeated multiple times to continuously monitor the output current and output voltage, and adjust the output voltage based on the second current variation of the present output current relative to the maximum power current. Through multiple monitoring and adjustment processes, the actual output power of the DC conversion module is gradually brought closer to the target output power. Stop the adjustments once the actual output power meets the user's power demand.

It should be understood that the steps in the flow charts according to the embodiments described above are shown in sequence as indicated by arrows, but are not necessarily executed in the order indicated by the arrows. Unless explicitly stated herein, these steps are not strictly limited in an execution order and can be executed in other orders. Moreover, at least some of the steps in the flow charts according to the embodiments described above may include a plurality of steps or a plurality of stages. These steps or stages are not necessarily executed at the same time, but may be executed at different times, and are not necessarily executed in sequence, but may be executed in turn or alternately with other steps or at least part of steps or stages in other steps.

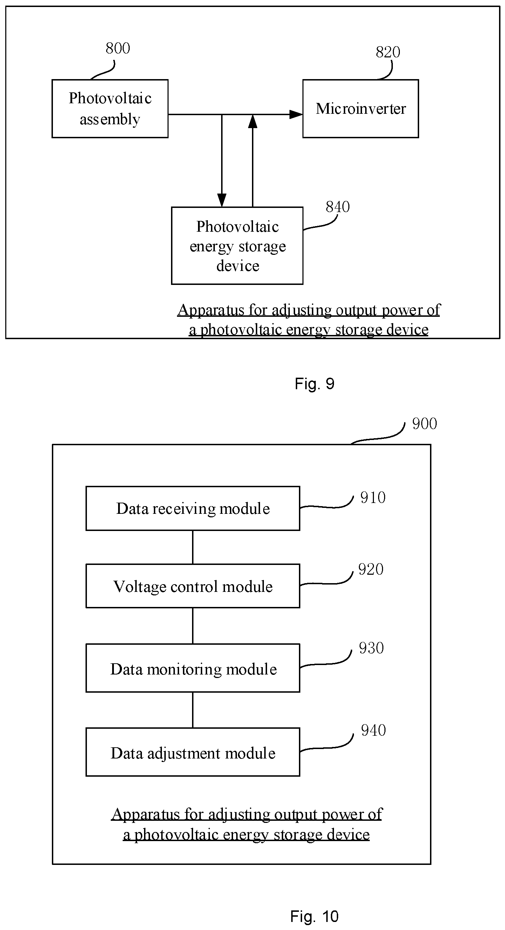

As shown in Fig. 9, based on the same inventive concept, the embodiment of the present disclosure also provides a system for adjusting output power of a photovoltaic energy storage device for implementing the above-mentioned methods for adjusting the output power of the photovoltaic energy storage device. The system includes a photovoltaic assembly 800, a photovoltaic energy storage device 820, and a microinverter 840. The photovoltaic assembly 800 is connected to the photovoltaic energy storage device 820 and the microinverter 840.

The photovoltaic assembly 800 is an assembly that converts solar energy into electrical energy. Specifically, the photovoltaic assembly 800 can be, but is not limited to, a photovoltaic array or a photovoltaic panel. The microinverter 840 is a small inverter that converts DC electrical energy into AC electrical energy. Compared to conventional large inverters, microinverters typically have smaller dimensions and lower power output. Specifically, taking the photovoltaic assembly 800 as an example of a solar panel, each solar panel can be independently connected to one microinverter.

The photovoltaic energy storage device 820 is configured to adjust the output power according to the steps in any embodiment of the above-mentioned methods for adjusting the output power of the photovoltaic energy storage device upon receiving a discharge command carrying target output power sent by a client in communication therewith, and to discharge to the microinverter 840.

In specific implementation, solar panels convert sunlight into direct current (DC) energy, which is then converted into alternating current (AC) energy through a connected microinverter 840. The microinverter 840 is connected to the photovoltaic energy storage device 820, and supplies the generated AC power to the photovoltaic energy storage device 820 for storage. When power is needed, the user sends the discharge command carrying the target output power to the photovoltaic energy storage device 820 through the client. The photovoltaic energy storage device 820 adjusts the output power according to the steps in any embodiment of the above-mentioned methods for adjusting the output power of the photovoltaic energy storage device, discharges to the microinverter 840, converts the stored energy into AC energy through the microinverter 840, and injects AC energy into the grid or load.

The coordinated operation between various components in the above system enables the photovoltaic power generation system to maximize the utilization of solar energy and provide stable power supply when needed. By combining the photovoltaic assembly, the photovoltaic energy storage device, and the microinverter, the system can achieve efficient energy conversion, maximum power point tracking, and balance of storage and release, thereby improving the performance and reliability of the photovoltaic power generation system.

Based on the same inventive concept, the embodiment of the present disclosure also provides an apparatus for adjusting output power of a photovoltaic energy storage device for implementing the above-mentioned methods for adjusting the output power of the photovoltaic energy storage device. The implementation scheme provided by the apparatus to solve the problem is similar to the implementation scheme described in the above method. Therefore, the specific limitations of one or more embodiments of the apparatus for adjusting output power of a photovoltaic energy storage device provided below can refer to the limitations of the photovoltaic energy storage device output power adjustment method mentioned in the previous text, which will not be repeated here.

In an embodiment, as shown in Fig. 10, the disclosure provides an apparatus for adjusting output power of a photovoltaic energy storage device, including:
a data receiving module 910 configured to receive a discharge command carrying target output power;
a voltage control module 920 configured to control an output voltage of the photovoltaic energy storage device to a preset initial output voltage;
a data monitoring module 930 configured to monitor the output voltage, an output current, and actual output power of the photovoltaic energy storage device; and
a data adjustment module 940 configured to adjust the output voltage based on a current variation of the output current currently when the output voltage is less than a preset voltage or the output current is greater than a preset current, until a power difference between the actual output power and the target output power falls within a preset power difference error range; or configured to adjust the output current based on a voltage variation of the output voltage relative to the preset initial output voltage currently when the output voltage is less than the preset voltage or the output current is greater than the preset current, until a power difference between the actual output power and the target output power falls within a preset power difference error range.

In an embodiment, the data adjustment module 940 is further configured to adjust the output voltage based on a first current variation or a second current variation of the output current currently, in which
the first current variation corresponds to a variation of the output current relative to the preset current, and the second current variation corresponds to a variation of the output current relative to a maximum power current when the output current is greater than the maximum power current, the maximum power current being greater than the preset current.

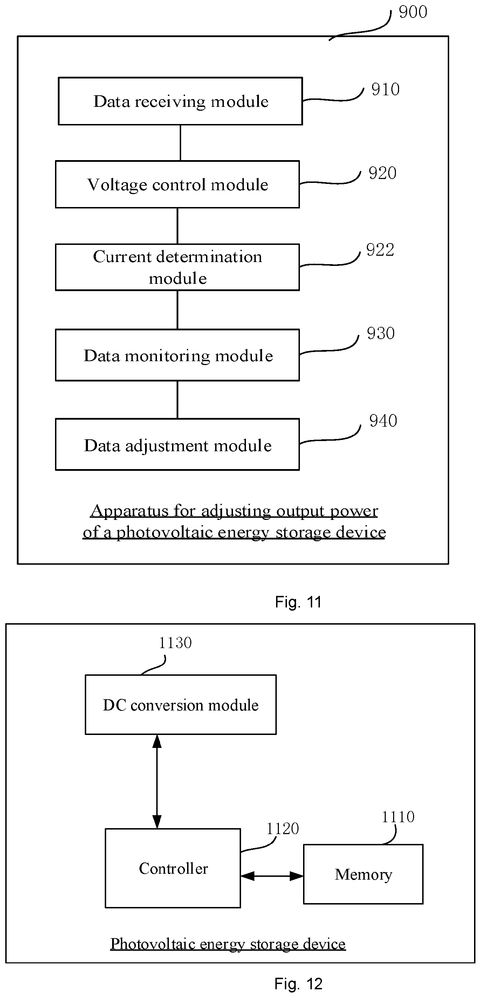

As shown in Fig. 11, in an embodiment, the apparatus further includes a current determination module 922 configured to determine the maximum power current based on the target output power and the preset initial output voltage.

In an embodiment, the data adjustment module 940 is further configured to obtain a first ratio of the first current variation to the maximum power current when the output current is greater than the maximum power current, determine a first voltage adjustment amount based on the first ratio and a preset proportionality coefficient, and adjust the output voltage based on the first current variation and the first voltage adjustment amount, until a power difference between actual output power and the target output power falls within a preset power difference error range.

In an embodiment, the data adjustment module 940 is further configured to reduce the output voltage based on the first voltage adjustment amount when the first current variation is a positive variation; and increase the output voltage based on the first voltage adjustment amount when the first current variation is a negative variation.

In an embodiment, the data adjustment module 940 is further configured to obtain a second ratio of the second current variation to the maximum power current; determine a second voltage adjustment amount based on the second ratio and the preset proportionality coefficient; and adjust the output voltage based on the second current variation and the second voltage adjustment amount, until a power difference between actual output power and the target output power falls within a preset power difference error range.

In an embodiment, the data adjustment module 940 is further configured to reduce the output voltage based on the second voltage adjustment amount when the second current variation is a positive variation; and increase the output voltage based on the second voltage adjustment amount when the second current variation is a negative variation.

In an embodiment, the data adjustment module 940 is further configured to adjust the output current based on a voltage variation of the output voltage relative to the preset initial output voltage currently when the output voltage is less than the preset voltage or the output current is greater than the preset current, until a power difference between the actual output power and the target output power falls within a preset power difference error range.

In an embodiment, the data adjustment module 940 is further configured to adjust the output current based on the voltage variation of the output voltage relative to the preset initial output voltage currently when the output current is greater than the maximum power current, until the power difference between the actual output power and the target output power falls within the preset power difference error range.

In an embodiment, the data adjustment module 940 is further configured to obtain a third ratio of the voltage variation to the preset initial output voltage; determine a current adjustment amount based on the third ratio and a preset proportionality coefficient; and adjust the output current based on the voltage variation and the current adjustment amount.

In an embodiment, the data adjustment module 940 is further configured to reduce the output current based on the current adjustment amount when the voltage variation is a positive variation; and increase the output current based on the current adjustment amount when the voltage variation is a negative variation.

The modules in the apparatus for adjusting power of a photovoltaic energy storage device described above can be fully or partially implemented through software, hardware, and their combinations. The above modules can be embedded in hardware form or independent of the processor in the computer device, or stored in software form in the memory of the computer device, so that the processor can call and execute the corresponding operations of the above modules.

As shown in Fig. 12, in an embodiment, a photovoltaic energy storage device is provided, which includes a memory 1110, a controller 1120, and a DC conversion module 1130. The controller 1120 is connected to the memory 1110 and the DC conversion module 1130, and the memory 1110 stores a computer program.

In the embodiment, the DC conversion module 1130 may be a buck-boost DC/DC module. The controller 1120 may be an MCU.

The controller is configured to monitor an output voltage, output current, and actual output power of the DC conversion module 1130, and execute a computer program upon receiving the discharge command carrying the target output power sent by a client in communication therewith, the controller to adjust the actual output power of the DC conversion module 1130 according to the steps in the above-mentioned methods for adjusting the output power of the photovoltaic energy storage device, and discharge to the external microinverter connected therewith. The specific output power adjustment process is described in the above-mentioned methods for adjusting the output power of the photovoltaic energy storage device and will not be repeated here.

In another embodiment, the photovoltaic energy storage device further includes a battery management and control module which is connected to the DC/DC module and the MCU separately. The battery management and control module is mainly used to manage and monitor the battery pack in the energy storage device. The buck-boost DC/DC module is used to increase or decrease the voltage of the DC power supply in the energy storage device to a voltage level suitable for specific applications. The MCU of energy storage devices is usually used to control and manage various aspects of the energy storage system, including battery management, charge and discharge control, communication interface, data acquisition and processing, and other functions. It can monitor and control the state of the energy storage system, execute various algorithms and logic to achieve safe and efficient operation of the energy storage system.

One skilled in the art can understand that the structure shown in Fig. 12 is only a block diagram of a part of the structure related to the present disclosure, and does not constitute a limitation on the computer equipment to which the present disclosure is applied. Specific computer equipment may include more or fewer components than shown in the figure, or combine certain components, or have different component arrangements.

In an embodiment, a computer-readable storage medium is provided, on which a computer program is stored. When the computer program is executed by a processor, the steps in any embodiment of the above-mentioned methods for adjusting the output power of the photovoltaic energy storage device are performed.

In an embodiment, a computer program product is provided, which includes a computer program. When the computer program is executed by a processor, the steps in any embodiment of the above-mentioned methods for adjusting the output power of the photovoltaic energy storage device are performed.

It should be noted that the data involved in the present disclosure (including but not limited to data used for analysis, stored data, displayed data, etc.) are all information and data authorized by the user or fully authorized by all parties, and the collection, use, and processing of relevant data must comply with relevant laws, regulations, and standards of relevant countries and regions.

Those skilled in the art can understand that implementing all or part of the processes in the above embodiments can be accomplished by instructing relevant hardware through a computer program. The computer program can be stored in a non-volatile computer-readable storage medium, and may include the processes of the embodiments of the above methods when executed. Any reference to memory, database, or other media used in the embodiments provided in the present disclosure may include at least one of non-volatile and volatile memories. The non-volatile memory may include a read-only memory (ROM), a magnetic tape, a floppy disk, a flash memory, an optical memory, a high-density embedded non-volatile memory, a resistive random access memory (ReRAM), a magnetoresistive random access memory (MRAM), a ferroelectric random access memory (FRAM), a phase change memory (PCM), a graphene memory, and the like. The volatile memory may include a random access memory (RAM) or an external cache memory, and the like. As an illustration and not a limitation, the RAM may take various forms, such as a static random access memory (SRAM) or a dynamic random access memory (DRAM), and the like. The databases involved in the embodiments provided in the present disclosure may include at least one of relational databases and non-relational databases. Non-relational databases may include distributed databases based on blockchain, but are not limited to these. The processors involved in the embodiments provided in the present disclosure may be general-purpose processors, central processing units, graphics processors, digital signal processors, programmable logic units, quantum computing based data processing logic units, and the like, but are not limited to these.

The technical features of the embodiments can be combined in any way. For conciseness of description, not all possible combinations of the technical features in the embodiments described above are described. However, these combinations should be within the scope of the description as long as no contradiction occurs in the combinations of these technical features.

The embodiments described above represent only several embodiments of the present disclosure, which are described specifically in detail, but should not be construed thus as limitations on the scope of the present disclosure. It should be noted that several variations and improvements can be made without departing the disclosure for those skilled in the art, all of which fall within the scope of the present disclosure. Accordingly, the scope of the present disclosure should be subject to the appended claims.

## Claims

1. A method for adjusting output power of a photovoltaic energy storage device, which is applied to a controller in the photovoltaic energy storage device and comprises:
- receiving a discharge command carrying target output power;
- controlling an output voltage of the photovoltaic energy storage device to a preset initial output voltage; and
- adjusting the output voltage based on a current variation of an output current at a present time when the output voltage is less than a preset voltage or the output current is greater than a preset current, until a power difference between actual output power and the target output power falls within a preset power difference error range.

2. The method for adjusting output power of a photovoltaic energy storage device of claim 1, wherein said adjusting the output voltage based on the current variation of the output current at the present timecomprises:
- adjusting the output voltage based on a first current variation or a second current variation of the output current at the present time, wherein
- the first current variation corresponds to a variation of the output current relative to the preset current, and the second current variation corresponds to a variation of the output current relative to a maximum power current when the output current is greater than the maximum power current, the maximum power current being greater than the preset current.

3. The method for adjusting output power of a photovoltaic energy storage device of claim 2, wherein said adjusting the output voltage based on the first current variation or the second current variation of the output current at the present timecomprises:
- determining the maximum power current based on the target output power and the preset initial output voltage;
- obtaining a first ratio of the first current variation to the maximum power current, or obtaining a second ratio of the second current variation to the maximum power current;
- determining a first voltage adjustment amount based on the first ratio and a preset proportionality coefficient, or determining a second voltage adjustment amount based on the second ratio and the preset proportionality coefficient; and
- adjusting the output voltage based on the first current variation and the first voltage adjustment amount, or adjusting the output voltage based on the second current variation and the second voltage adjustment amount.

4. The method for adjusting output power of a photovoltaic energy storage device of claim 3, wherein said adjusting the output voltage based on the first current variation and the first voltage adjustment amount comprises:
- reducing the output voltage based on the first voltage adjustment amount when the first current variation is a positive variation; and
- increasing the output voltage based on the first voltage adjustment amount when the first current variation is a negative variation;
- or said adjusting the output voltage based on the second current variation and the second voltage adjustment amount comprises:
- reducing the output voltage based on the second voltage adjustment amount when the second current variation is a positive variation; and
- increasing the output voltage based on the second voltage adjustment amount when the second current variation is a negative variation.

5. A method for adjusting output power of a photovoltaic energy storage device, which is applied to a controller in the photovoltaic energy storage device and comprises:
- receiving a discharge command carrying target output power;
- controlling an output voltage of the photovoltaic energy storage device to a preset initial output voltage; and
- adjusting an output current based on a voltage variation of the output voltage relative to the preset initial output voltage at a present time when the output voltage is less than a preset voltage or the output current is greater than a preset current, until a power difference between actual output power and the target output power falls within a preset power difference error range.

6. The method for adjusting output power of a photovoltaic energy storage device of claim 5, further comprising:
- determining a maximum power current based on the target output power and the preset initial output voltage; and
- adjusting the output current based on the voltage variation of the output voltage relative to the preset initial output voltage at the present time when the output current is greater than the maximum power current, until the power difference between the actual output power and the target output power falls within the preset power difference error range.

7. The method for adjusting output power of a photovoltaic energy storage device of claim 5 or 6, wherein said adjusting the output current based on the voltage variation of the output voltage relative to the preset initial output voltage at the present timecomprises:
- obtaining a third ratio of the voltage variation to the preset initial output voltage;
- determining a current adjustment amount based on the third ratio and a preset proportionality coefficient; and
- adjusting the output current based on the voltage variation and the current adjustment amount.

8. The method for adjusting output power of a photovoltaic energy storage device of claim 7, wherein said adjusting the output current based on the voltage variation and the current adjustment amount comprises at least one of:
- reducing the output current based on the current adjustment amount when the voltage variation is a positive variation; and
- increasing the output current based on the current adjustment amount when the voltage variation is a negative variation.

9. A system for adjusting output power of a photovoltaic energy storage device, comprising: a photovoltaic assembly, a photovoltaic energy storage device, and a microinverter, wherein the photovoltaic assembly is connected to the microinverter and the photovoltaic energy storage device; and
- the photovoltaic energy storage device is configured to adjust the output power according to the method for adjusting the output power of the photovoltaic energy storage device of any one of claims 1 to 8 and to discharge to the microinverter upon receiving a discharge command carrying target output power sent by a client in communication connection therewith.

10. A photovoltaic energy storage device comprising a memory, a controller, and a direct current (DC) conversion module, the controller being connected to the memory and the DC conversion module, the memory storing a computer program, wherein
- the controller is configured to monitor an output voltage, output current, and actual output power of the DC conversion module, to execute the computer program upon receiving a discharge command carrying target output power, and to adjust the actual output power of the DC conversion module according to the method for adjusting the output power of the photovoltaic energy storage device of any one of claims 1 to 8.

11. A computer-readable storage medium on which a computer program is stored, wherein, when the computer program is executed by a processor, the steps of the method for adjusting the output power of the photovoltaic energy storage device of any one of claims 1 to 8 are performed.

12. A computer program product including a computer program, wherein when the computer program is executed by a processor, the steps of the method for adjusting the output power of the photovoltaic energy storage device of any one of claims 1 to 8 are performed.
